(19) **Europäisches Patentamt / European Patent Office / Office européen des brevets**

(11) **EP 2 950 523 A1**

(12) **EUROPEAN PATENT APPLICATION**

(43) Date of publication:
**02.12.2015 Bulletin 2015/49**

(51) Int Cl.:
$H04N\ 5/235^{(2006.01)}$      $H04N\ 21/8358^{(2011.01)}$
$H04N\ 5/913^{(2006.01)}$

(21) Application number: **14305795.8**

(22) Date of filing: **28.05.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
 • **Baudry, Séverine**
   **35576 Cesson-Sévigné (FR)**
 • **Chupeau, Bertrand**
   **35576 Cesson-Sévigné (FR)**
 • **De Vito, Mario**
   **35576 Cesson-Sévigné (FR)**

(74) Representative: **Huchet, Anne**
**Technicolor**
**1, rue Jeanne d'Arc**
**92443 Issy-les-Moulineaux Cedex (FR)**

(54) **Method of estimating flicker on recorded video by camcorder**

(57)      A method of estimating a flicker on a camcorded video firstly obtains a camcorded video with unknown camcording and display settings. The camcorded video includes a flicker and a watermark. Next, a spectrum of the camcorded video is obtained by using a temporal discrete Fourier transform. Then, a temporal frequency of the flicker is estimated by looking for a local maximum value in the spectrum of the camcorded video.

FIG.3

START

→ S1 **VECTOR OF LINE AVERAGES OBTAINED**

→ S2 **TEMPORAL DFT PERFORMED**

→ S3 **APPROXIMATION OF TEMPORAL FLICKER FREQUENCY $f_t$ RETRIEVED**

→ S4 **APPROXIMATION OF TEMPORAL FLICKER FREQUENCY $f_t$ REFINED**

→ S5 **VERTICAL FLICKER FREQUENCY $f_v$ AND PHASE $\varphi$ ESTIMATED**

→ S6 **AMPLITUDE PARAMETERS $\alpha$ AND $\beta$ ESTIMATED**

END

EP 2 950 523 A1

**Description**

TECHNICAL FIELD

The present disclosure relates to a method of estimating a flicker on a recorded video by a camcorder.

BACKGROUND ART

Decoding a digital watermark on a camcorded video is a difficult task in general. Camcording causes various artifacts, such as geometric distortions, temporal transform and frame merging, luminance and chrominance distortions. Numerous methods have been proposed to counter geometric or temporal distortions. However, the flicker effect has never been addressed in a watermark detection scope. A simple solution is to apply a de-flickering filter to the video, for instance, by using a VirtualDub filter. However, such a solution is not satisfactory since it has been designed to produce a visually satisfying result, and not to accurately preserve the signal components. Actually, the de-flickering filter will not only suppress the flicker, but also alter other components of the video, and will thus impair the watermark signal as well. It is thus very important to be able to selectively remove the flicker without damaging other components of the video.

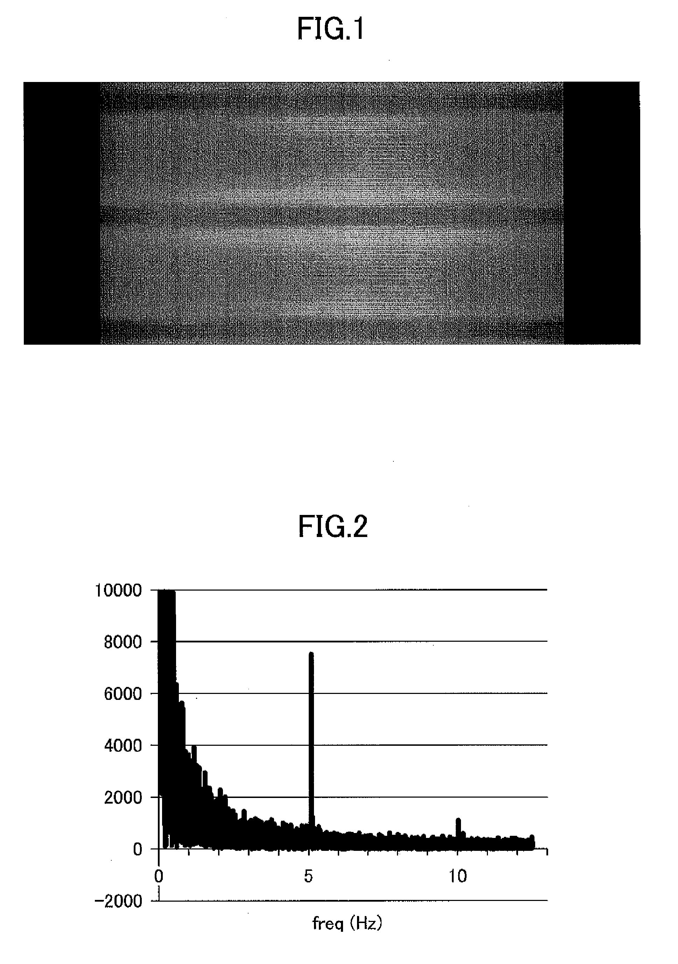

Camcording a video produces numerous artifacts on the captured images. Among the artifacts, flicker is commonly observed especially when camcording a LCD display. FIG. 1 is an image of an example of flicker on a recorded camcorded video by a camcorder or video camera. As shown in FIG. 1, the luminosity of images varies in a periodic way, and sometimes varies also across the image itself (for example, if the camcorder uses a rolling shutter, i.e. each line is acquired with a small delay) . This is due to aliasing, because the display backlight signal, which is a periodic signal at a "high" frequency (for example, around 180Hz), is sampled by the camcorder at a lower frequency (typically between 50 and 60 Hz). If the camcorded video has been watermarked, such a luminance variation may render the watermark detection difficult, since the flicker amplitude is often larger than the watermark amplitude. Hence, suppressing the flicker will enhance the watermark detection. However, the flicker parameters (for example, frequency, phase, amplitude and so on) differ from one camcording setting to another and must therefore be estimated blindly from the camcorded video. Moreover, estimating the flicker can be used to enhance the image quality by selectively removing or controlling the flicker besides the application of watermark detection.

SUMMARY

Accordingly, embodiments of the present invention may provide a novel and useful method of estimating a flicker on a camcorded video solving one or more of the problems discussed above.

More specifically, according to an embodiment of the present invention, there is provided a method of estimating a flicker on a camcorded video. In the method, a camcorded video with unknown camcording and display setting is firstly obtained. The camcorded video includes a flicker. Next, a spectrum of the camcorded video is obtained by using a temporal discrete Fourier transform. Then, a temporal frequency of the flicker is estimated by looking for a local maximum value in the spectrum of the camcorded video.

Other objects, features, and advantages of an embodiment of the present invention will become more apparent from the following detailed description when read in conjunction with the accompanying drawings.

BRIEF DESCRIPTION OF THE DRAWINGS

FIG. 1 is an image of an example of flicker on a camcorded image;
FIG. 2 is an example of a camcorded video temporal spectrum;
FIG. 3 is a flowchart illustrating a method of estimating a flicker by using flicker parameters of an embodiment of the present invention;
FIG. 4 is a graph illustrating a flicker phase for all lines of an image; and
FIG. 5 is a graph illustrating an unwrapped flicker phase, derived from FIG. 4.

DESCRIPTION OF THE EMBODIMENTS

A description is given below of embodiments of the present invention, with reference to the drawings.

According to an embodiment of a method of estimating a flicker on a camcorded (recorded) video, to begin with, a camcorded video is obtained. The camcorded video may have unknown camcording (recording) and display settings because the camcorded video may include a pirated edition. In many cases, the camcording and display settings of such a pirated edition video are not known. The method of estimating the flicker on the camcorded video of the embodiment can be applied to such a camcorded video of the pirated edition. In many cases, such a camcorded video includes a flicker. Hence, in the method, to remove the flicker, a camcorded video with unknown camcording settings is obtained firstly, and then flicker parameters are blindly estimated on the video. Here, the flicker parameters mean various items to identify the flicker. Next, these estimated parameters are used to suppress or attenuate the flicker, prior to watermark detection.

[Flicker Model]

A first step of an embodiment of the present invention is to accurately model the flicker. This model will be used as a basis for the flicker parameters estimation. From the physical understanding of the phenomenon, as well as carefully designed experiments, the following generic model is provided as equation (1).

$$Y(x, y, t) = X(x, y, t) + (\alpha X(x, y, t) + \beta) \cos(f_t t + f_y y + \varphi) \quad (1)$$

Where $X(x,y,t)$ is the luminance value of pixel x,y of frame t of the original video, and $Y(x,y,t)$ is the camcorded luminance value, the flicker component is the second term on the right side of equation (1) as follows:

$$(\alpha X(x, y, t) + \beta) \cos(f_t t + f_y y + \varphi) \quad (2)$$

In formula (2), $f_y$ and $f_t$ are respectively the vertical and temporal flicker frequencies, and $\varphi$ is the flicker phase. The vertical flicker component is due to the fact that each line is captured with a small delay compared to the previous one, thus the flicker signal is slightly "shifted" from one line to the other, and this phase shift is equal to $f_y y$. The values of $f_t$, $f_y$, and $\varphi$ are parameters of the flicker. The values of $\alpha$ and $\beta$ are also parameters of the flicker.

In a LCD display, the backlight is modulated in amplitude by a pixel array, depending on the pixel luminance value. The liquid crystal element corresponding to this pixel will attenuate more or less the amplitude of the backlight (for example, maximum attenuation corresponding to black, and minimal attenuation corresponding to white). Thus, the flicker amplitude A varies linearly with the local video brightness X (which is larger for bright areas than for dark areas) as equation (3) as follows.

$$A = \alpha X + \beta \quad (3)$$

In practice, appropriate examples of values of $\alpha$ and $\beta$ are $\alpha \ll 1$, and $\beta \ll X_{MAX}$. That is to say, the flicker amplitude is small compared to the video luminance. Experimental measures show that $\alpha$ varies, for example, between 0.02 for normal flicker, and 0.2 for heavy flicker. For example, $\beta$ is typically lower than 5 in the absolute value.

In a realistic case, and in particular for watermark detection, the original video X is not available beside the camcorded video Y. Thus, the challenge will be to estimate the entire flicker parameters $f_t$, $f_y$, $\varphi$, $\alpha$, $\beta$ and in particular the amplitude parameters $\alpha$ and $\beta$ in a blind way. The flicker parameters $f_t$, $f_y$, $\varphi$, $\alpha$, $\beta$ are estimated by using the Temporal Discrete Fourier Transform (which may be hereinafter called a "TDFT") of the camcorded luminance. First, the temporal flicker frequency $f_t$ is estimated by finding a local maximal value in the TDFT. FIG. 2 is an example of a camcorded video spectrum. In FIG. 2, there is a local maximum value around 5 Hz, and there is a local maximum value around 10 Hz, which is smaller than that of 5 Hz.

Next, the phases of the TDFT for each line are compared to find the vertical flicker frequency $f_y$ and the phase $\varphi$. Finally, using both TDFT coefficients at the lowest frequency and TDFT coefficients around $f_t$ makes it possible to find the amplitude parameters $\alpha$ and $\beta$.

[Parameter Estimation]

Next, a description is given below of an embodiment of a process of accurately estimating the flicker parameters in a blind way, i.e. using only the pirated camcorded video, without the original video and any knowledge of the capture settings (e.g., type of camcorder, camcorder settings, display settings, etc.). The major novelty of the embodiment of the present invention consists in a method of estimating the flicker amplitude parameters, $\alpha$ and $\beta$ in addition to estimating the parameters of $f_t$, $f_y$ and $\phi$.

Since the flicker is caused by the display backlight, and the backlight amplitude is modulated at each pixel by the pixel luminance value, the flicker amplitude thus varies linearly with the pixel brightness.

To estimate the flicker parameters of the generic flicker model described above, the embodiment of the present invention proposes the following steps.

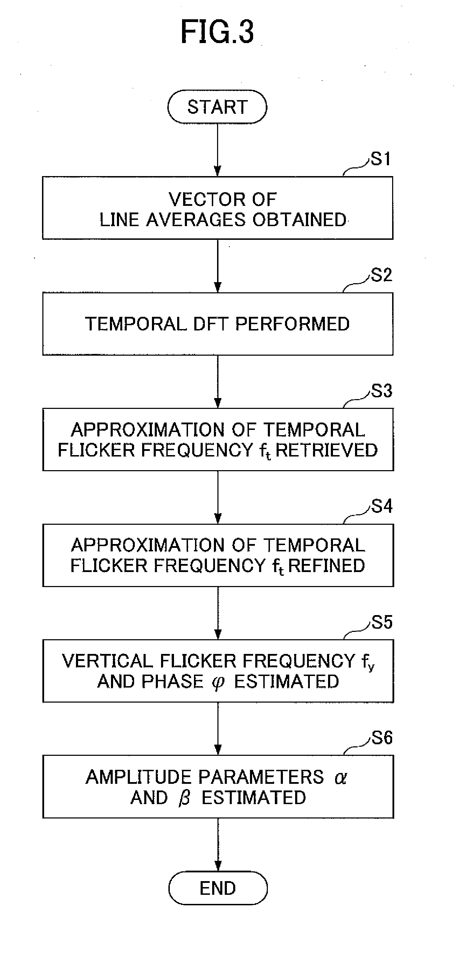

FIG. 3 is a flowchart illustrating a method of estimating a flicker by using flicker parameters.

Before performing the flowchart in FIG. 3, a camcorded video is provided for a camcorder that implements the method of estimating the flicker by using the parameters.

In step S1, the vector of line averages is obtained by calculation for each frame $Y_t$ of the camcorded video by using the following equation (4).

$$Y'(y,t) = \sum_{x=1}^{W} Y(x, y, t) \quad (4)$$

In step S2, the Temporal Discrete Fourier transform (Temporal DFT) of Y' is performed for each line y to obtain a spectrum of each line noted as $Y'_y(f)$.

In step S3, a first approximation of the temporal flicker frequency $f_t$ is retrieved and obtained by taking the local maximum of $|Y'(f)|$ with f not belonging to the signal lowest frequencies. A first embodiment is to select a line number y (for instance, y being at the middle of the image), and to find a local maximum on $|Y'(f)|$. For instance, find the maximum of $|Y_y'(f)|$ for f>0.1, where f is the normalized frequency such that the spectrum is defined for $0 \le f < 0.5$. Another possibility is to find the frequency yielding maximal value for each line y, then to combine all the estimation together (for instance by averaging all the maximal frequencies, or performing a majority vote).

In step S4, the approximation found in step S3 is refined by computing a Temporal Discrete Fourier Transform on the zero-padded signal Y' (y, t) and take the maximum around the previous approximated estimation of the temporal flicker frequency $f_t$.

In step S5, the vertical flicker frequency $f_y$ and the phase $\varphi$ are estimated.

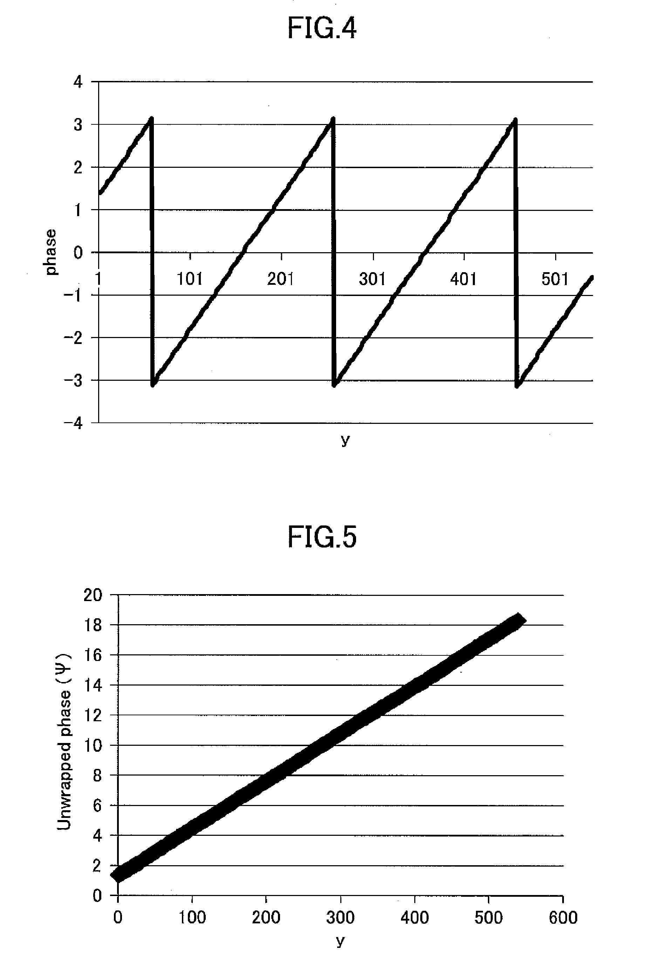

FIG. 4 is a graph illustrating a flicker phase for all lines of an image. FIG. 5 is a graph illustrating an unwrapped flicker phase, derived from FIG. 4.

In step S5 of FIG. 3, the "unwrapped" phase $\Psi_y$ of $Y'_y(f_t)$ is computed for all y (i.e. all line numbers), using $\Phi_y$ which is the phase of $Y'_y(f_t)$. $\phi y$ can be computed using the following formula (5), (6) and (7).

$$\psi_0 = \Phi_0 \quad (5)$$

$$\psi_y = \psi_{y-1} + \delta_y \quad (6)$$

$$\text{With } \delta_y = (\Phi_y - \Phi_{y-1} + \pi) \bmod [2\pi] - \pi \quad (7)$$

In formula (2), considering the flicker as a temporal signal, it is noted that the flicker phase is $(f_y y + \varphi)$, which is a linear function of the line number y. Therefore, the unwrapped phase $\Psi_y$ should obey the following equation.

$$\psi_y = f_y y + \varphi \quad (8)$$

Hence, by performing linear regression on the phase $\Psi_y$, an estimation of the vertical flicker frequency $f_y$ can be obtained, as well as an estimation of the offset phase $\varphi$.

In step S6, the amplitude parameters $\alpha$ any $\beta$ are estimated. To achieve this aim, a mean square error method can be used, which is detailed in various documents. As a result, the following equations (9) and (10) can be obtained.

$$\alpha = 2Reei\psi f \neq 0; f = -\theta\theta Y'y(ft + fY'y(f)f \neq 0; f = -\theta\theta Y'y(f)2 \qquad (9)$$

$$\beta = \mathrm{Re}\left(2e^{-i\psi}Y'(f_t) - \alpha Y'(0)\right) \qquad (10)$$

Where the TDFT coefficients Y'(.) are computed for a given line y of the video (for instance y being the middle line of the image). $\Psi$ is the flicker phase for said line y and is given by : $\Psi = f_y y + \varphi$. $\Theta$ is a parameter determining the frequency range on which the estimation is computed. In a particular embodiment, $\theta = 10/M$ where M is the total number of frames of the video (M determines the frequency resolution of the TDFT). Re(x) gives the real part of complex number x, and $\overline{Y}$ gives the complex conjugate of complex number Y.

Thus, the parameters $\alpha$ and $\beta$ can be obtained by using equations (9) and (10). By obtaining the parameters $\alpha$ and $\beta$, the flicker can be properly estimated.

[Flicker Removal]

Once all the flicker parameters have been estimated, the flicker signal shall be subtracted from the camcorded video prior to watermark detection. A preferred embodiment is to compute the de-flickered image from camcorded image Y(x,y,t) by using the following equation (11) and the estimated flicker parameters.

$$Z(x, y, t) = \frac{Y(x, y, t) - \beta\cos\left(f_t t + f_y y + \varphi\right)}{1 + \alpha\cos\left(f_t t + f_y y + \varphi\right)} \qquad (11)$$

Z(x, y, t) is always defined since $\alpha \ll 1$.

[Implementation and testing]

The method was successfully tested on videos camcorded with various exposure values, thus therein various flicker amplitudes. The method made it possible to estimate the flicker parameters and to attenuate the flicker. After flicker compensation, synchronization and watermark detection was improved. The watermark was detectable on videos where the detection otherwise failed. On other videos, flicker compensation enables the watermark detection score to increase.

Thus, the method enables the flicker on camcorded video to be attenuated, which improves watermark detection. This makes it possible to retrieve the watermark even on highly impaired camcorded videos. Moreover, the method can provide a high-quality image by removing the flicker from the image.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority or inferiority of the invention. Although the embodiments of the present invention have been described in detail, it should be understood that various changes, substitutions, and alterations could be made hereto without departing from the spirit and scope of the invention.

**Claims**

1. A method of estimating a flicker on a camcorded video, the method comprising steps of:

   obtaining a camcorded video with unknown camcording and display settings, the camcorded video including a flicker;
   obtaining a spectrum of the camcorded video by using a temporal discrete Fourier transform; and
   estimating a temporal frequency of the flicker by looking for a local maximum value in the spectrum of the camcorded video.

2. The method as claimed in claim 1, wherein the step of obtaining the spectrum of the camcorded video and the step of estimating the temporal frequency of the flicker are performed for a predetermined line of a frame of the camcorded video.

3. The method as claimed in claim 1, wherein the step of obtaining the spectrum of the camcorded video and the step of estimating the temporal frequency of the flicker are performed for each line of a frame of the camcorded video.

4. The method as claimed in claim 3, further comprising a step of:

estimating a flicker vertical frequency and a phase by performing a linear regression on a phase of a temporal Fourier coefficient at the flicker temporal frequency for each line of the frame of the camcorded video.

5. The method as claimed in claim 4, further comprising a step of:

estimating amplitude parameters of the flicker by using the temporal Fourier coefficient around zero and around the temporal frequency of the camcorded video.

6. The method as claimed in claim 5, further comprising a step of:

estimating a flicker signal of the flicker for each pixel of the frame based on the estimated temporal frequency, the flicker vertical frequency, the phase and the amplitude parameters.

7. The method as claimed in claim 6, further comprising a step of:

removing the flicker from the camcorded video by subtracting the estimated flicker signal from each pixel of the frame.

8. The method as claimed in claim 7, wherein the step of estimating the flicker signal and the step of removing the flicker from the camcorded video are performed for each frame.

9. The method as claimed in claim 8, further comprising a step of:

detecting a watermark from the camcorded video after the step of removing the flicker from the camcorded video.

10. The method as claimed in claim 3, further comprising:

computing a vector of a line average for each frame between the step of obtaining the camcorded video and the step of obtaining the spectrum of the camcorded video.

# FIG.1

# FIG.2

# FIG.3

```
        ┌─────────┐
        │  START  │
        └─────────┘
             │
             ▼                              S1
┌──────────────────────────────────┐
│           VECTOR OF              │
│     LINE AVERAGES OBTAINED       │
└──────────────────────────────────┘
             │
             ▼                              S2
┌──────────────────────────────────┐
│      TEMPORAL DFT PERFORMED       │
└──────────────────────────────────┘
             │
             ▼                              S3
┌──────────────────────────────────┐
│   APPROXIMATION OF TEMPORAL       │
│ FLICKER FREQUENCY fₜ RETRIEVED    │
└──────────────────────────────────┘
             │
             ▼                              S4
┌──────────────────────────────────┐
│   APPROXIMATION OF TEMPORAL       │
│  FLICKER FREQUENCY fₜ REFINED     │
└──────────────────────────────────┘
             │
             ▼                              S5
┌──────────────────────────────────┐
│  VERTICAL FLICKER FREQUENCY f_y   │
│    AND PHASE φ ESTIMATED          │
└──────────────────────────────────┘
             │
             ▼                              S6
┌──────────────────────────────────┐
│    AMPLITUDE PARAMETERS α         │
│       AND β ESTIMATED             │
└──────────────────────────────────┘
             │
             ▼
        ┌─────────┐
        │   END   │
        └─────────┘
```

- S1: VECTOR OF LINE AVERAGES OBTAINED
- S2: TEMPORAL DFT PERFORMED
- S3: APPROXIMATION OF TEMPORAL FLICKER FREQUENCY $f_t$ RETRIEVED
- S4: APPROXIMATION OF TEMPORAL FLICKER FREQUENCY $f_t$ REFINED
- S5: VERTICAL FLICKER FREQUENCY $f_y$ AND PHASE $\varphi$ ESTIMATED
- S6: AMPLITUDE PARAMETERS $\alpha$ AND $\beta$ ESTIMATED

## FIG.4

## FIG.5

Europäisches
Patentamt

European
Patent Office

Office européen
des brevets

**EUROPEAN SEARCH REPORT**

Application Number

EP 14 30 5795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 00/07363 A1 (INTEL CORP [US]; SMITH RONALD D [US]; STARR GREGORY W [US]) 10 February 2000 (2000-02-10) | 1,3,10 | INV. H04N5/235 H04N21/8358 |
| Y | * page 6, line 9 - page 12, line 6 * ----- | 2 | ADD. H04N5/913 |
| Y | US 6 710 818 B1 (KASAHARA MISA [JP] ET AL) 23 March 2004 (2004-03-23) * column 8, line 4 - column 9, line 66 * ----- | 2 | |
| A | US 2003/030744 A1 (BAER RICHARD L [US]) 13 February 2003 (2003-02-13) * paragraph [0016] - paragraph [0018] * * paragraph [0035] - paragraph [0045] * * paragraph [0047] - paragraph [0051] * ----- | 1,3-8,10 | |
| A | WO 2004/066626 A1 (KONINKL PHILIPS ELECTRONICS NV [NL]; VAN LEEST ADRIAAN J [NL]; LINNART) 5 August 2004 (2004-08-05) * page 1, line 9 - line 23 * * page 2, line 3 - line 13 * * page 8, line 2 - page 10, line 27 * ----- | 1,8,9 | |

TECHNICAL FIELDS
SEARCHED      (IPC)

H04N
G06T

The present search report has been drawn up for all claims

| Place of search | Date of completion of the search | Examiner |
|---|---|---|
| The Hague | 19 November 2014 | Wentzel, Jürgen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                             
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 5795

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2014

| Patent document cited in search report | | Publication date | Patent family member(s) | | Publication date |
|---|---|---|---|---|---|
| WO 0007363 | A1 | 10-02-2000 | AU | 4832599 A | 21-02-2000 |
| | | | CN | 1315110 A | 26-09-2001 |
| | | | DE | 19983408 B4 | 18-01-2007 |
| | | | DE | 19983408 T1 | 28-06-2001 |
| | | | GB | 2354663 A | 28-03-2001 |
| | | | JP | 4195197 B2 | 10-12-2008 |
| | | | JP | 2002521974 A | 16-07-2002 |
| | | | KR | 100381532 B1 | 26-04-2003 |
| | | | MY | 124395 A | 30-06-2006 |
| | | | TW | 403852 B | 01-09-2000 |
| | | | US | 2002131491 A1 | 19-09-2002 |
| | | | US | 2003090566 A1 | 15-05-2003 |
| | | | WO | 0007363 A1 | 10-02-2000 |
| US 6710818 | B1 | 23-03-2004 | CA | 2322593 A1 | 08-04-2001 |
| | | | CN | 1292623 A | 25-04-2001 |
| | | | EP | 1091571 A2 | 11-04-2001 |
| | | | US | 6710818 B1 | 23-03-2004 |
| US 2003030744 | A1 | 13-02-2003 | EP | 1289285 A2 | 05-03-2003 |
| | | | JP | 4200516 B2 | 24-12-2008 |
| | | | JP | 2003110880 A | 11-04-2003 |
| | | | US | 2003030744 A1 | 13-02-2003 |
| WO 2004066626 | A1 | 05-08-2004 | AT | 341157 T | 15-10-2006 |
| | | | CN | 1739293 A | 22-02-2006 |
| | | | DE | 602004002561 T2 | 21-06-2007 |
| | | | EP | 1588556 A1 | 26-10-2005 |
| | | | ES | 2271835 T3 | 16-04-2007 |
| | | | JP | 4709960 B2 | 29-06-2011 |
| | | | JP | 2006517068 A | 13-07-2006 |
| | | | KR | 20050091094 A | 14-09-2005 |
| | | | US | 2006129566 A1 | 15-06-2006 |
| | | | WO | 2004066626 A1 | 05-08-2004 |

EPO FORM P0459

For more details about this annex : see Official Journal of the European Patent Office, No. 12/82